# EUROPEAN PATENT APPLICATION

(11) **EP 2 781 349 A1**
(43) Date of publication of application: **24.09.2014**
(21) Application number: 12849840.9
(22) Date of filing: 31.10.2012
(51) Int. Cl.: B32B 27/00, C08K 3/36, C08L 83/06

(54) **TRANSPARENT HEAT-RESISTANT FLAME-RETARDANT FILM**

(30) Priority: 14.11.2011 JP 2011249152
(71) Applicant: Nitto Denko Corporation, Osaka 567-8680 (JP)
(72) Inventor: HIRANO, Keisuke, Ibaraki-shi Osaka 567-8680 (JP); DOI, Kohei, Ibaraki-shi Osaka 567-8680 (JP); SUGINO, Yusuke, Ibaraki-shi Osaka 567-8680 (JP); ISHIGURO, Shigeki, Ibaraki-shi Osaka 567-8680 (JP)
(74) Representative: Grünecker, Kinkeldey, Stockmair & Schwanhäusser
(86) International application number: PCT/JP2012/078137
(87) International publication number: WO 2013/073368

(57) **Abstract**

The present invention provides a transparent heat-resistant non-flammable film that has high transparency, heat resistance, and flame retardancy. The transparent heat-resistant non-flammable film according to the present invention includes a transparent heat-resistant protective layer comprising a polysiloxane resin containing a particulate inorganic oxide as a crosslinking agent on at least one surface of a transparent amorphous thermoplastic resin film having a heat distortion temperature of 250°C or less. The transparent heat-resistant protective layer preferably has a refractive index in the range of 1.40 to 1.43. The transparent heat-resistant protective layer preferably has a thickness in the range of 1 to 100 µm.

## Description

### Technical Field

The present invention relates to a transparent heat-resistant non-flammable film, a non-combustible film and an optical film formed thereof, and a process for production of the transparent heat-resistant non-flammable film.

### Background Art

Different transparent films formed of thermoplastic resins, including amorphous polymers such as polyesters and polycarbonates, and aliphatic hydrocarbon polymers such as polypropylenes (PPs), and cycloalkane polymers, find use in different applications. Thermoplastic resins, as their name suggests, melt when heated above their melting points. Theoretically transparent films formed of thermoplastic resins have heat resistance below their melting points, and thus cannot be used in applications requiring high heat resistance. In contrast, known thermosetting resins generally have high heat resistance, such as polyimides, polyamides, epoxys, and silicone resins. Many of thermosetting resins however have low transparency. Since these resins are generally flammable materials, any flame retardant should be added to films formed of such resins in order to provide non-flammable films, which flame retardant precludes the transparency of the films.

In general, these films are coated with protective layers such as hardcoat layers in order to maintain surface smoothness or improve scratch and stain resistance. A process of providing a hardcoat layer by ultraviolet curing a condensation product from a low molecular weight siloxane oligomer is proposed in PTL 1. However, due to low molecular weight hardcoat layers, films with such protective layers have inferior mechanical strength despite their hard surfaces when exposed to temperatures above their melting points, regardless of excellent hardcoat properties and heat resistance. That is, the films cannot retain their shapes at temperatures higher than the melting points of the resins.

A urethane-acrylate-based film is proposed as a hardcoat film having excellent wear resistance and flexing properties in PTL 2. This urethane-acrylate-based hardcoat film exhibits high elongation of the hardcoat layer, workability, and pencil hardness but also has a problem of low heat resistance, that is, yellowing at elevated temperatures above 200°C. This hardcoat film also fails to ensure flame retardancy.

A hardcoat film formed by treating the surface of silica particles with reactive acrylic groups is proposed in PTL 3. This hardcoat film, which has excellent scratch resistance, cannot sufficiently decrease the surface reflectance due to its relatively high refractive index of 1.53. The hardcoat film still has a problem of discoloration when moieties from the acrylic groups are exposed to elevated temperatures of 200°C or more for a long time, and thus cannot exhibit sufficient flame retardancy.

As described above, films with protective layers such as hardcoat layers do not have well balanced properties such as improved heat resistance, and flame retardancy, and stain resistance.

### Citation List

### Patent Literature

PTL 1: Japanese Patent Application Laid-Open Publication No. 2008-106103
PTL 2: Japanese Patent Application Laid-Open Publication No. 2005-305383
PTL 3: Japanese Patent Application Laid-Open Publication No. 2004-149631

### Summary of Invention

### Technical Problem

An object of the present invention is to provide a transparent heat-resistant non-flammable film that has high transparency, heat resistance, and flame retardancy, a non-combustible film and an optical film formed thereof, and an industrially efficient process for production of the transparent heat-resistant non-flammable film. Solution to Problem

The present inventors, who have diligently studied in order to solve the problems described above, found that when a transparent heat-resistant protective layer that includes a crosslinked structure prepared by providing a silicone resin having excellent heat resistance, transparency, and flame retardancy as a base together with a particulate inorganic oxide as a crosslinking agent and then crosslinking the silicone resin with the particulate inorganic oxide is provided on one or both surfaces of a thermoplastic resin film, the thermoplastic resin film can have remarkably improved properties such as heat resistance, transparency, flame retardancy, and stain resistance. The present invention has been made through further research on the basis of these findings.

That is, the present invention provides a transparent heat-resistant non-flammable film that includes a transparent heat-resistant protective layer comprising a polysiloxane resin containing a particulate inorganic oxide as a crosslinking agent on at least one surface of a transparent amorphous thermoplastic resin film having a heat distortion temperature of 250°C or less.

The transparent heat-resistant protective layer preferably has a refractive index in the range of 1.40 to 1.43.

The transparent heat-resistant protective layer preferably has a thickness in the range of 1 to 100 µm.

In the transparent heat-resistant non-flammable film, the particulate inorganic oxide is a colloidal silica that has a primary particle size in the range of 1 to 100 nm and has a surface potential in the range of pH 2 to 5, wherein silanol groups on the surface of the colloidal silica are chemically bonded to the polysiloxane resin to crosslink the resin.

Moreover, the polysiloxane resin has at least one reactive group selected from an alkoxysilyl group and a silanol group within the molecule, has a total content of the reactive groups of 8 to 48 wt%, and may be crosslinked by chemical bonding with the particulate inorganic oxide.

The present invention also provides a non-combustible film including the transparent heat-resistant non-flammable film.

Furthermore, the present invention provides an optical film including the transparent heat-resistant non-flammable film.

Furthermore, the present invention provides a process for production of a transparent heat-resistant non-flammable film that comprises providing a transparent heat-resistant protective layer formed of a silicone resin composition comprising a polysiloxane resin containing a particulate inorganic oxide as a crosslinking agent on at least one surface of a transparent amorphous thermoplastic resin film having a heat distortion temperature of 250°C or less. Advantageous Effects of Invention

A transparent heat-resistant non-flammable film according to the present invention that includes a transparent heat-resistant protective layer formed of a specific silicone resin composition on a surface of a thermoplastic resin film has very high transparency, heat resistance, and flame retardancy. The transparent heat-resistant non-flammable film also has high stain resistance. Furthermore, the transparent heat-resistant protective layer can impart superior properties such as high transparency, heat resistance, flame retardancy, stain resistance, surface hardness, and bending strength to the transparent heat-resistant non-flammable film, compared to the original thermoplastic resin film.

### Brief Description of Drawing

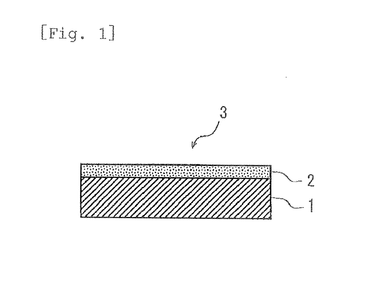

Fig. 1 is a schematic sectional view of an exemplary transparent heat-resistant non-flammable film according to the present invention.

### Description of Embodiments

The transparent heat-resistant non-flammable film according to the present invention includes a transparent heat-resistant protective layer comprising a polysiloxane resin containing a particulate inorganic oxide as a crosslinking agent on at least one surface (preferably both surfaces) of a transparent amorphous thermoplastic resin film having a heat distortion temperature of 250°C or less.

Fig. 1 is a schematic sectional view of an exemplary transparent heat-resistant non-flammable film according to the present invention. A transparent heat-resistant non-flammable film 3 includes a transparent heat-resistant protective layer 2 formed of a polysiloxane resin containing a particulate inorganic oxide as a crosslinking agent on one surface of a thermoplastic resin film 1. Alternatively, the thermoplastic resin film 1 may include transparent heat-resistant protective layers on its both surfaces.

### [Thermoplastic resin film]

In the present invention, the thermoplastic resin film may be any transparent amorphous film that has a heat distortion temperature of 250°C or less. Examples of such a thermoplastic resin film include amorphous polyester films [such as amorphous polyethylene terephthalate (PET) films], amorphous polyolefin films [such as 4-methylpentene (co)polymer films], cyclic polyolefin films, polycarbonate (PC) films, polyvinyl chloride (PVC) films, styrene resin films (such as polystyrene films, ABS resin films, and AS resin films), and acrylic resin films. The thermoplastic resin film may be a monolayer or multilayer film. Preferably, the thermoplastic resin film is a non-oriented film.

The thermoplastic resin film, which is amorphous, has a crystallinity of 20% or less, for example. The thermoplastic resin film has a total light transmittance (at a thickness of 100 µm) of, for example, 80% or more, and preferably 85% or more. The thickness of the thermoplastic resin film can be appropriately selected depending on applications. The upper limit of the thickness is usually (less than) 250 µm, preferably (less than) 150 µm, and more preferably (less than) 100 µm, and the lower limit is, for example, 5 µm, preferably 10 µm, and more preferably 15 µm.

Preferably, of the two sides of the thermoplastic resin film, one on which a transparent heat-resistant protective layer is to be formed is not subjected to release treatment from the viewpoint of adhesion.

### [Transparent heat-resistant protective layer]

In the present invention, the transparent heat-resistant protective layer is formed of a polysiloxane resin containing a particulate inorganic oxide as a crosslinking agent. Preferably, the particulate inorganic oxide is chemically bonded to the polysiloxane resin.

Any particulate inorganic oxide that has reactive functional groups on its surface can be used as a crosslinking agent. Examples of such a particulate inorganic oxide include silica (SiO₂ or SiO), alumina (Al₂O₃), antimony-doped tin oxide (ATO), titanium oxide (titania, TiO₂), and zirconia (ZrO₂). Among these materials, particularly preferred is silica. The particulate inorganic oxide may be used alone or in combination.

Examples of the reactive functional groups include hydroxyl, isocyanate, carboxyl, epoxy, amino, mercapto, and vinylically unsaturated groups, halogen atoms, and isocyanurate groups. Among them, particularly preferred are hydroxyl groups. The hydroxyl groups on the surface of the particulate silica are present in the form of silanol groups.

The particulate inorganic oxide has an upper limit of the average particle size (primary particle size) of, for example, 1000 nm, preferably 500 nm, more preferably 200 nm, and most preferably 100 nm, and has a lower limit of 1 nm, for example. The average particle size can be determined by any method such as a dynamic light scattering method.

The particulate inorganic oxide preferably has a narrow particle size distribution, and is preferably in a monodisperse system where the particulate inorganic oxide is dispersed in the form of primary particles. Furthermore, the particulate inorganic oxide preferably has a surface potential in an acidic region (for example, pH 2 to 5, preferably pH 2 to 4). The particulate inorganic oxide may have such a surface potential during the reaction with the polysiloxane resin.

Preferably, the particulate inorganic oxides described above are used as colloid. Examples of the colloidal particulate inorganic oxides include colloidal silica, colloidal alumina (alumina sol), colloidal tin oxide (aqueous tin oxide water dispersion), and colloidal titanium oxide (titania sol).

Examples of the colloidal silica include colloids of microparticles (having an average particle size of, for example, 5 to 1000 nm, preferably 10 to 100 nm) of silicon dioxide (silicic acid anhydride) as described in Japanese Patent Application Laid-Open Publication No. 53-112732, and Japanese Patent Publication Nos. 57-9051 and 57-51653.

Moreover, the colloidal silica may, if necessary, contain, for example, alumina and sodium aluminate, and also, if necessary, contain stabilizers such as inorganic bases (for example, sodium hydroxide, potassium hydroxide, lithium hydroxide, and ammonia) and organic bases (for example, tetramethylammonium).

These colloidal silicas can be produced by any known sol-gel process as described in, for example, Werner Stober, et al.; J. Colloid and Interface Sci., 26, 62-69(1968), Rickey D. Badley, et al.; Langmuir 6, 792-801(1990), or Shikizai Kyokai-shi (Journal of the Japan Society of Color Material), 61 [9] 488-493(1988).

Preferably, the colloidal silica is not surface-modified. The colloidal silica has silanol functional groups on the surface.

These colloidal silicas may be commercially available products, such as those sold under the trade names "Snowtex-XL, " "Snowtex-YL," "Snowtex-ZL," "PST-2," "Snowtex-20," "Snowtex-30," "Snowtex-C," "Snowtex-O," "Snowtex-OS," "Snowtex-OL, " and "Snowtex-50" (available from Nissan Chemical Industries, Ltd.), and those sold under the trade names "ADELITE AT-30," "ADELITE AT-40," and "ADELITE AT-50" (available from Nippon Aerosil Co., Ltd.). Among these products, most preferred are those sold under the trade names "Snowtex-O," "Snowtex-OS," and "Snowtex-OL."

Commercially available colloidal particulate inorganic substances other than the above colloidal silicas can also be used. Examples of such particulate inorganic substances include alumina sols (hydrosols), for example, those sold under the trade names "Alumina sol 100," "Alumina sol 200," and "Alumina sol 520" (available from Nissan Chemical Industries, Ltd.), titania sols (hydrosols), for example, those sold under the trade names "TTO-W-5" (available from ISHIHARA SANGYO KAISHA, LTD.) and "TS-020" (available from Tayca Corporation), and aqueous tin oxide water dispersions, for example, those sold under the trade names "SN-100D" and "SN-100S" (available from ISHIHARA SANGYO KAISHA, LTD.).

Preferably, in the present invention, the particulate inorganic oxide is a colloidal silica that has a primary particle size in the range of 1 to 100 nm and has a surface potential in the range of pH 2 to 5, wherein silanol groups on the surface of the colloidal silica are chemically bonded to the polysiloxane resin to crosslink the resin.

In the present invention, the polysiloxane resin may be any polysiloxane compound that has reactivity to functional groups on the surface of the particulate inorganic oxide. The polysiloxanes compound may most preferably be a condensable silicone resin. Examples of the condensable silicone resin include a condensable group-containing polysiloxanes that has basic structural units of a D unit and a T unit (hereinafter may also be referred to as a "D/T-unit condensable group-containing polysiloxane"), and a condensable group-containing polysilsesquioxane that has a basic structural unit of a T unit (hereinafter may also be referred to as a "condensable group-containing polysilsesquioxane"). These condensable silicone resins may be used alone or in combination.

Among the condensable silicone resins, most preferred is a combination of a D/T-unit condensable group-containing polysiloxane and a condensable group-containing polysilsesquioxane. Sheets formed of a D/T-unit condensable group-containing polysiloxane in combination with a condensable group-containing polysilsesquioxane have high compatibility among heat resistance, strength, and flexibility.

Examples of the condensable group include silanol, alkoxysilyl (for example, C₁₋₆ alkoxysilyl), cycloalkyloxysilyl (for example, C₃₋₆ cycloalkyloxysilyl), and aryloxysilyl (for example, C₆₋₁₀ aryloxysilyl) groups. Among them, preferred are silanol, alkoxysilyl, cycloalkyloxysilyl, and aryloxysilyl groups, and most preferred are silanol and alkoxysilyl groups.

In the present invention, the D/T-unit condensable group-containing polysiloxane particularly has basic structural units of a D unit represented by Formula (1) and a T unit represented by Formula (2).

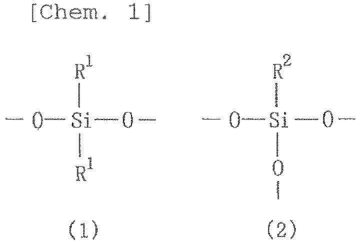

In Formula (1), R¹s are the same or different and each represent a monovalent hydrocarbon group selected from saturated hydrocarbon groups and aromatic hydrocarbon groups. In Formula (2), R² represents a monovalent hydrocarbon group selected from saturated hydrocarbon groups and aromatic hydrocarbon groups.

Examples of the saturated hydrocarbon groups of R¹ and R² include straight or branched C₁₋₆ alkyl groups such as methyl, ethyl, propyl, isopropyl, butyl, isobutyl, pentyl, and hexyl groups; C₃₋₆ cycloalkyl groups such as cyclopentyl and cyclohexyl groups. Examples of the aromatic hydrocarbon groups in R¹ and R² include C₆₋₁₀ aryl groups such as phenyl and naphthyl groups.

R¹ and R² each are preferably C₁₋₆ alkyl groups and C₆₋₁₀ aryl groups, and more preferably a methyl group.

In the D/T-unit condensable group-containing polysiloxane, the D units represented by Formula (1) may be each the same or different, and are preferably the same. Also, in the D/T-unit condensable group-containing polysiloxane, the T units represented by Formula (2) may be each the same or different, and are preferably the same.

The D/T-unit condensable group-containing polysiloxane is also a partial condensation product of the corresponding silicone monomers [for example, a partial condensation product of a bifunctional silicone monomer such as a dialkyl(or aryl)dialkoxysilane and a trifunctional silicone monomer such as an alkyl (or aryl) trialkoxysilane], and has a structural unit including a D unit, a T unit, and a group represented by Formula (3) :

-OR³ (3)

The group represented by Formula (3) is bonded to a silicon atom and terminates the molecule.

R³ represents a monovalent hydrocarbon group selected from saturated hydrocarbon groups and aromatic hydrocarbon groups. The saturated hydrocarbon groups and the aromatic hydrocarbon groups include those similar to the saturated hydrocarbon groups and the aromatic hydrocarbon groups of R¹ in Formula (1). R³ is preferably a saturated hydrocarbon group, more preferably a C₁₋₆ alkyl group, and most preferably a methyl or ethyl group.

Examples of such a D/T-unit condensable group-containing polysiloxanes include an alkoxysilyl group (for example, C₁₋₆ alkoxysilyl group)-containing polymethylsiloxane, an alkoxysilyl group (for example, C₁₋₆ alkoxysilyl group)-containing polymethylphenylsiloxane, an alkoxysilyl group (for example, C₁₋₆ alkoxysilyl group)-containing polyphenylsiloxane. These D/T-unit alkoxysilyl group-containing polysiloxanes may be used alone or in combination.

Among these D/T-unit condensable group-containing polysiloxanes, preferred is a c₁₋₆ alkoxysilyl group-containing polysiloxane, more preferred is a methoxysilyl group-containing polysiloxane or ethoxysilyl group-containing polysiloxane, and most preferred is methoxysilyl group-containing polymethylsiloxane or ethoxysilyl group-containing polymethylsiloxane.

The condensable group (for example, alkoxysilyl group) content of the D/T-unit condensable group-containing polysiloxane has an upper limit of, for example, 30 wt% and preferably 25 wt%, and has a lower limit of, for example, 8 wt%, preferably 10 wt%, and more preferably 12 wt%. The condensable group (for example, alkoxysilyl group) content can be determined from the rate of the weight loss of the polysiloxane when the sample is heated from room temperature to 300°C with a thermo gravimetry analyzer (TGA).

The number average molecular weight of the D/T-unit condensable group-containing polysiloxane (determined by GPC against polystyrene standard) has an upper limit of, for example, 6000, preferably 5500, and more preferably 5300, and has a lower limit of, for example, 800, preferably 1000, and more preferably 1200.

The D/T-unit condensable group-containing polysiloxane can be commercially available products (D/T-unit alkoxysilyl group-containing polysiloxanes), such as those sold under the trade names "X-40-9246" and "X-40-9250" (available from Shin-Etsu Chemical Co., Ltd.).

In the present invention, the condensable group-containing polysilsesquioxane has basic structural units of T units represented by Formula (2). In the condensable group-containing polysilsesquioxane, the T units represented by Formula (2) may be each the same or different, and are preferably the same.

The condensable group-containing polysilsesquioxane is also a partial condensation product of the corresponding silicone monomer [for example, a partial condensation product of a trifunctional silicone monomer such as an alkyl (or aryl)trialkoxysilane], and has a structural unit including a T unit and a group represented by Formula (4):

-OR⁴ (4)

The group represented by Formula (4) is bonded to a silicon atom and terminates the molecule.

R⁴ represents a monovalent hydrocarbon group selected from saturated hydrocarbon groups and aromatic hydrocarbon groups. The saturated hydrocarbon groups and the aromatic hydrocarbon groups include those similar to the saturated hydrocarbon groups and the aromatic hydrocarbon groups of R¹ in Formula (1). R⁴ is preferably a saturated hydrocarbon group, more preferably a C₁₋₆ alkyl group, and most preferably a methyl or ethyl group.

The condensable group-containing polysilsesquioxane may have any structure such as a random, ladder, or cage structure, and most preferably has a random structure from the viewpoint of flexibility. These condensable group-containing polysilsesquioxanes may be used alone or in combination.

Among these condensable group-containing polysilsesquioxanes, preferred is a C₁₋₆ alkoxysilyl group-containing polysilsesquioxane, more preferred is methoxysilyl group-containing polysilsesquioxane or ethoxysilyl group-containing polysilsesquioxane, and most preferred is methoxysilyl group-containing polymethylsilsesquioxane or ethoxysilyl group-containing polymethylsilsesquioxane.

The condensable group (for example, alkoxysilyl group) content of the condensable group-containing polysilsesquioxane has an upper limit of, for example, 50 wt%, preferably 48 wt%, and more preferably 46 wt%, and has a lower limit of, for example, 10 wt%, preferably 15 wt%, and more preferably 20 wt%. The condensable group (for example, alkoxysilyl group) content can be determined from the rate of the weight loss of the polysilsesquioxane when the sample is heated from room temperature to 300°C with a thermo gravimetry analyzer (TGA).

The number average molecular weight of the condensable group-containing polysilsesquioxane (determined by GPC against polystyrene standard) has an upper limit of, for example, 6000, preferably 3500, and more preferably 3000, and has a lower limit of, for example, 200, preferably 300, and more preferably 400.

The condensable group-containing polysilsesquioxane can be commercially available products (alkoxysilyl group-containing polysilsesquioxanes), such as those sold under the trade names "KC-89," "KR-500," and "X-40-9225" (available from Shin-Etsu Chemical Co., Ltd.).

Besides, the polysiloxane compound having reactive silanol groups (at the ends) in the molecule can be those sold under the trade names "X-21-3153" and "X-21-5841" (available from Shin-Etsu Chemical Co., Ltd.).

In the present invention, the proportion of the total weight of the D/T-unit condensable group-containing polysiloxane and the condensable group-containing polysilsesquioxane in the entire polysiloxane compound (polysiloxane resin) is preferably 50 wt% or more, more preferably 70 wt% or more, and most preferably 90 wt% or more.

Preferably, in the present invention, the polysiloxane resin has an alkoxysilyl group and/or a silanol group (at the ends) in the molecule, has a total content of those groups (the alkoxysilyl group and the silanol group) of 8 to 48 wt%, and is crosslinked by chemical bonding with the particulate inorganic oxide. The total content of the alkoxysilyl group and the silanol group has an upper limit of 30 wt% more preferably, and has a lower limit of 10 wt% more preferably.

In the present invention, the condensable silicone resin is preferably a condensable group-containing polysilsesquioxane, or a combination of a D/T-unit condensable group-containing polysiloxane and a condensable group-containing polysilsesquioxane from the viewpoints of bending strength and flame retardancy in particular. In this combination, the ratio of the D/T-unit condensable group-containing polysiloxane to the condensable group-containing polysilsesquioxane [the former/the latter (weight ratio)] has an upper limit of, for example, 4.9, preferably 3, and more preferably 2, and has a lower limit of, for example, 0 and preferably 0.02. The film formed of the condensable silicone resin with a higher ratio of the D/T-unit condensable group-containing polysiloxane may readily ignite and flame due to its higher organic group content.

### [A polysiloxane resin containing a particulate inorganic oxide as a crosslinking agent]

In the present invention, the particulate inorganic oxide content of the polysiloxane resin containing a particulate inorganic oxide as a crosslinking agent (or the particulate inorganic oxide content of the transparent heat-resistant protective layer) can be appropriately selected. The upper limit is, for example, 30 wt%, preferably 20 wt%, and more preferably 15 wt%, and the lower limit is, for example, 1 wt%, preferably 2 wt%, and more preferably 3 wt%. The transparent heat-resistant protective layer with a lower particulate inorganic oxide content readily exhibits a lower mechanical strength, while the transparent heat-resistant protective layer with a higher particulate inorganic oxide content is often fragile. In each case, the final transparent heat-resistant non-flammable film readily exhibits a low bending strength, and cracks readily appear on its transparent heat-resistant protective layer.

Preferably, the polysiloxane resin is chemically bonded to the particulate inorganic oxide as described above. Such a particulate inorganic oxide-containing polysiloxane resin can be produced as follows.

The particulate inorganic oxide-containing polysiloxane resin can be produced, for example, by the reaction of the particulate inorganic oxide with a condensable group-coning polysiloxane resin (preferably, a condensable group-containing polysilsesquioxane, or a D/T-unit condensable group-containing polysiloxane and a condensable group-containing polysilsesquioxane, or these compounds and a silanol group-containing polysiloxane resin) in a solvent, preferably in the presence of an acid. The polysiloxane resin has a functional group that can react with a reactive functional group on the surface of the particulate inorganic oxide. For the particulate inorganic oxide that has reactive functional groups on its surface in the form of silanol groups, the condensable groups react with the silanol groups.

Examples of the solvent include water; alcohols, such as methanol, ethanol, 2-propanol, and 2-methoxyethanol; and mixtures thereof. Among them, preferred are mixtures of water and alcohols, and more preferred are a mixture of water and 2-propanol and a mixture of water, 2-propanol, and 2-methoxyethanol.

Examples of the acid include inorganic acids, such as hydrochloric acid, nitric acid, sulfuric acid, phosphoric acid; organic acids, such as acetic acid and p-toluenesulfonic acid. Among them, preferred are inorganic acids, and most preferred is nitric acid. These acids can be used in the form of aqueous solution. The acid used may be added such that the pH of the reaction system can be adjusted to about 2 to 5 (preferably, 2 to 4).

Any reaction process can be used. Examples of the process include (i) addition of a mixture of a polysiloxane resin and a solvent into a mixture of a particulate inorganic oxide and a solvent, (ii) addition of a mixture of a particulate inorganic oxide and a solvent into a mixture of a polysiloxane resin and a solvent, and (iii) addition of both a mixture of a particulate inorganic oxide and a solvent and a mixture of a polysiloxane resin and a solvent into a solvent.

If a D/T-unit condensable group-containing polysiloxane and a condensable group-containing polysilsesquioxane are used in combination as polysiloxane resins, a particulate inorganic oxide may be reacted with a mixture of the D/T-unit condensable group-containing polysiloxane and the condensable group-containing polysilsesquioxane; or a particulate inorganic oxide may be reacted with the D/T-unit condensable group-containing polysiloxane at the first stage and then with the condensable group-containing polysilsesquioxane at the second stage. Alternatively, a particulate inorganic oxide may be reacted with the condensable group-containing polysilsesquioxane at the first stage and then with the D/T-unit condensable group-containing polysiloxane at the second stage. In the present invention, a particulate inorganic oxide can be reacted with a condensable silyl group-containing polysilsesquioxane at the first stage and then a D/T-unit condensable group-containing polysiloxane and/or a silanol group-containing polysiloxane resin at the second stage to produce a transparent heat-resistant non-flammable film having remarkably high heat resistance and strength in combination with remarkably high flexibility.

The upper limit of the reaction temperature is, for example, 150°C and preferably 130°C, and the lower limit is, for example, 40°C and preferably 50°C. The reaction time has an upper limit of, for example, 24 hours and preferably 12 hours, and has a lower limit of, for example, 1 minute and preferably 3 minutes.

After completion of the reaction, the solvent can be removed by distillation to adjust the concentration and viscosity of the reaction mixture if necessary, resulting in a silicone resin composition comprising a particulate inorganic oxide-containing polysiloxane resin. After the particulate inorganic oxide-containing polysiloxane resin is produced, the particulate inorganic oxide (a silica such as colloidal silica and aerosil) may be added in order to enhance flame retardancy. Also, any additive such as a curing catalyst may be added into the silicone resin composition, if required.

The solid content of the resulting silicone resin composition has an upper limit of, for example, 95 wt% and preferably 90 wt%, and has a lower limit of, for example, 50 wt% and preferably 60 wt% from the viewpoints of handling, applicability, and impregnating properties.

### [A transparent heat-resistant non-flammable film]

The transparent heat-resistant non-flammable film according to the present invention can be produced by providing a transparent heat-resistant protective layer formed of a silicone resin composition comprising a polysiloxane resin containing a particulate inorganic oxide as a crosslinking agent on at least one surface of the transparent amorphous thermoplastic resin film having a heat distortion temperature of 250°C or less.

For example, the transparent heat-resistant non-flammable film according to the present invention can be produced by applying the silicone resin composition comprising a polysiloxane resin containing a particulate inorganic oxide as a crosslinking agent on at least one surface of the transparent amorphous thermoplastic resin film having a heat distortion temperature of 250°C or less to from a transparent heat-resistant protective layer.

The silicone resin composition may be applied by any process. For example, the silicone resin composition can be directly applied by any known coating such as kiss coating, gravure coating, bar coating, spray coating, knife coating, and wire coating, to form a coating layer, and the resultant coating layer can be, if required, dried at a temperature of, for example, about 80 to 150°C to produce a transparent heat-resistant non-flammable film with a transparent heat-resistant protective layer 2 formed of a particulate inorganic oxide-containing silicone resin on one surface (or both surfaces) of the substrate 1 as shown in Fig. 1.

The transparent heat-resistant non-flammable film according to the present invention can also be produced by applying the silicone resin composition comprising a polysiloxane resin containing a particulate inorganic oxide as a crosslinking agent on a substrate having a release-treated surface to produce a transparent heat-resistant protective layer, and laminating the transparent heat-resistant protective layer on at least one surface of the transparent amorphous thermoplastic resin film having a heat distortion temperature of 250°C or less.

The thickness of the transparent heat-resistant protective layer 2 has an upper limit of, for example, 300 µm and preferably 200 µm, and has a lower limit of, for example, 5 µm and preferably 10 µm.

The refractive index of the resulting transparent heat-resistant protective layer is extremely low, for example, 1.45 or less (about 1.40 to 1.45), usually 1.40 to 1.43, preferably 1.40 to 1.42, and more preferably 1.40 to 1.41. This can reduce the surface reflectance of the film, and thus enhance the apparent light transmittance of the film.

The thickness of the transparent heat-resistant non-flammable film according to the present invention can be appropriately selected depending on application fields. The upper limit of the thickness is usually (less than) 550 µm, preferably (less than) 350 µm, more preferably (less than) 155 µm, and most preferably (less than) 105 µm, and the lower limit is, for example, 10 µm, preferably 15 µm, and more preferably 20 µm.

The transparent heat-resistant non-flammable film according to the present invention has high transparency. The transparent heat-resistant non-flammable film has a total light transmittance (at a thickness of 100 µm) of typically 88% or more and preferably 90% or more. The transparent heat-resistant non-flammable film according to the present invention often has a higher total light transmittance than that of the original thermoplastic resin film without a transparent heat-resistant protective layer.

The transparent heat-resistant non-flammable film according to the present invention also has excellent heat resistance. For example, after the film is left at 250°C or more for a certain period, discoloration or deformation is not found in the transparent heat-resistant non-flammable film.

The transparent heat-resistant non-flammable film according to the present invention is characterized in that the coefficient of linear expansion of some resins is lower than that of the original thermoplastic resin film without a transparent heat-resistant protective layer. For example, the coefficient of linear expansion (ASTM D696) of the transparent heat-resistant non-flammable film is 90% or less and preferably 80% or less of that of the original thermoplastic resin film without a transparent heat-resistant protective layer. Specifically, the coefficient of linear expansion (ASTM D696) of the transparent heat-resistant non-flammable film provided with a transparent heat-resistant protective layer on a polyethylene terephthalate film (coefficient of linear expansion: about 7 x 10⁻⁵ cm/cm·°C) is 3.5 x 10⁻⁵ cm/cm·°C to 5.5 x 10⁻⁵ cm/cm·°C. The coefficient of linear expansion (ASTM D696) of the transparent heat-resistant non-flammable film provided with a transparent heat-resistant protective layer on a polycarbonate film (coefficient of linear expansion: about 6.8 x·10⁻⁵ cm/cm·°C) is 5 x 10⁻⁵ cm/cm·°C to 6.2 x 10⁻⁵ cm/cm·°C.

Furthermore, the transparent heat-resistant non-flammable film according to the present invention also has high flame retardancy. For example, the flame retardancy is rated "V-0" or more in accordance with UL94.

In the transparent heat-resistant non-flammable film according to the present invention, the surface of the transparent heat-resistant protective layer has a high pencil hardness (JIS K5401), for example, "H" or more.

Furthermore, the transparent heat-resistant non-flammable film according to the present invention also has a high bending strength. For example, when the transparent heat-resistant non-flammable film is subjected to bending strength tests (that are carried out by holding the sample bent at 180 degrees for one minute), no cracks appear on its transparent heat-resistant protective layer.

The transparent heat-resistant non-flammable film according to the present invention maintains holds the tensile strength (ISO 527) and the elongation at break (ISO 527) of the original thermoplastic resin film without a transparent heat-resistant protective layer.

The transparent heat-resistant non-flammable film according to the present invention that includes a specific silicone resin layer on its surface also has high stain resistance.

As described above, the transparent heat-resistant non-flammable film according to the present invention, which has various superior properties, particularly high transparency, heat resistance, flame retardancy, and stain resistance, is useful as a non-combustible film and an optical film in particular.

### Examples

The present invention will now be described more specifically with reference to the following examples and comparative examples, but should not be intended to be limited thereto. All "parts" and "percentages" in the following description are by weight unless otherwise indicated. The refractive index of the film is determined with an Abbe refractometer (available from ATAGO CO.,LTD.).

### Synthesis 1

To a vessel equipped with a stirrer, a reflux condenser, and a nitrogen inlet, added are 30 g of a solution of colloidal silica having an average particle size of 8 to 11 nm (trade name: Snowtex OS available from Nissan Chemical Industries, Ltd., solid content: 20%) in 30 g of 2-propanol and 5 g of 2-methoxyethanol. The acidity (pH) of the mixture was adjusted within the range of 2 to 4 with concentrated nitric acid. The mixture was then heated to 70°C, and then a solution of 80 g of a polysiloxane compound having reactive methoxysilyl groups at the molecular ends (a silsesquioxane compound) (trade name: X-40-9225 available from Shin-Etsu Chemical Co., Ltd., the methoxy content: 24%) in 80 g of 2-propanol was added dropwise to the mixture via an addition funnel over 2 hours to react the polysiloxane compound (the silsesquioxane compound) with the surface of the particulate colloidal silica.

A solution of 40 g of another polysiloxane compound having reactive methoxysilyl groups at the ends of the molecule (a polysiloxane compound derived from a trifunctional alkoxysilane and a bifunctional alkoxysilane) (trade name: X-40-9246 available from Shin-Etsu Chemical Co., Ltd., the methoxy content: 12%) in 40 g of 2-propanol was then added dropwise over one hour to react with the silsesquioxane compound on the colloidal silica. After the mixture was heated at 80°C and stirred for one hour, the solvent was removed by distillation with a rotary evaporator, followed by addition of 80 g of toluene. The mixture was heated at 90°C and stirred for one hour. The mixture was cooled to room temperature, and the solvent was removed by distillation to adjust the viscosity of the mixture, resulting in a resin solution A for forming a transparent heat-resistant protective layer.

The resin solution A for forming a transparent heat-resistant protective layer was applied onto a release-treated polyethylene terephthalate (PET) film (trade name "MRF38" available from Mitsubishi Plastics, Inc.) such that the thickness of the dried film was 100 µm, followed by heating at 130°C for 10 minutes to form the film. The film had a refractive index of 1.41.

### Synthesis 2

A resin solution B for forming a transparent heat-resistant protective layer was prepared with the same experimental instrument used in Synthesis 1 as in Synthesis 1 except that the amount of the solution of colloidal silica used was 60 g and the amount of 2-propanol initially used was 60 g.

The resin solution B for forming a transparent heat-resistant protective layer was applied onto a release-treated polyethylene terephthalate (PET) film (trade name "MRF38" available from Mitsubishi Plastics, Inc.) such that the thickness of the dried film was 100 µm, followed by heating at 130°C for 10 minutes to form a film. The film had a refractive index of 1.42.

### Synthesis 3

A resin solution C for forming a transparent heat-resistant protective layer was prepared with the same experimental instrument used in Synthesis 1 as in Synthesis 1 except that the amount of X-40-9225 used was 80 g, the amount of 2-propanol used for dissolving the X-40-9225 was 80 g, the amount of X-40-9246 used was 30 g, and the amount of 2-propanol used for dissolving the X-40-9246 was 30 g. The procedure was also modified as follows: After a solution containing X-40-9246 was added dropwise, a solution of 10 g of a polysiloxane compound having another reactive silanol groups (trade name: X-21-3153 available from Shin-Etsu Chemical Co., Ltd., silanol group content: 1 to 14%) in 10 g of 2-propanol was added dropwise over one hour, and the mixture was then heated at 80°C and stirred for one hour.

The resin solution C for forming a transparent heat-resistant protective layer was applied onto a release-treated polyethylene terephthalate (PET) film (trade name "MRF38" available from Mitsubishi Plastics, Inc.) such that the thickness of the dried film was 100 µm, followed by heating at 130°C for 10 minutes to form a film. The film had a refractive index of 1.42.

### Comparative Synthesis 1

As a particulate inorganic oxide, 30 g of silica having an average particle size of about 7 nm and having its surface modified with hexamethyldisilazane (trade name: AEROSIL R816 available from Nippon Aerosil Co., Ltd.) was dispersed in 30 g of water with an ultrasonic homogenizer to prepare an aqueous dispersion. A resin solution D for forming a protective layer was prepared as in Synthesis 1 except that the aqueous dispersion was used instead of a solution of colloidal silica having an average particle size of 8 to 11 nm (trade name: Snowtex OS available from Nissan Chemical Industries, Ltd., solid content: 20%).

The resin solution D for forming a transparent heat-resistant protective layer was applied onto a release-treated polyethylene terephthalate (PET) film (trade name "MRF38" available from Mitsubishi Plastics, Inc.) such that the thickness of the dried film was 100 µm, followed by heating at 130°C for 10 minutes to form a film. The film had a transparency which is too low to determine its refractive index accurately.

### Example 1

The resin solution A for forming a transparent heat-resistant protective layer prepared in Synthesis 1 was applied onto the two sides of a polyethylene terephthalate (PET) film (trade name "Lumirror S10" available from Toray Industries, Inc., the thickness: 25 µm, the refractive index: 1.57) such that the thickness of the dried film was 10 µm, and was heated and dried at 130°C for 10 minutes to form a transparent heat-resistant protective layer, resulting in a transparent heat-resistant non-flammable film A1.

### Example 2

A transparent heat-resistant non-flammable film A2 was prepared as in Example 1 except that the resin solution was applied onto the two sides of a polycarbonate film (trade name "LUCKRON R" from INTERNATIONAL CHEMICAL CO.,LTD., the thickness: 30 µm, the refractive index: 1.59) instead of the polyethylene terephthalate (PET) film.

### Example 3

A transparent heat-resistant non-flammable film A3 was prepared as in Example 1 except that the resin solution was applied onto the two sides of a cycloolefin film (trade name "ARTON F5023" from JSR, the thickness: 30 µm, the refractive index: 1.51) instead of the polyethylene terephthalate (PET) film.

### Example 4

A transparent heat-resistant non-flammable film A4 was prepared as in Example 1 except that the resin solution was applied onto the two sides of a cycloolefin film (trade name "ZEONOR 1060R" from ZEON CORPORATION, the thickness: 30 µm, the refractive index: 1.53) instead of the polyethylene terephthalate (PET) film.

### Example 5

A transparent heat-resistant non-flammable film A5 was prepared as in Example 1 except that the resin solution was applied onto the two sides of a transparent polyolefin film [poly(methylpentene) copolymer film] (trade name "Opulent X-44B" from Mitsui Chemicals Tohcello, Inc., the thickness: 25 µm, the refractive index: 1.46) instead of the polyethylene terephthalate (PET) film.

### Example 6

A transparent heat-resistant non-flammable film B1 was prepared as in Example 1 except that the resin solution B for forming a transparent heat-resistant protective layer prepared in Synthesis 2 was used instead of the resin solution A for forming a transparent heat-resistant protective layer prepared in Synthesis 1.

### Example 7

A transparent heat-resistant non-flammable film C1 was prepared as in Example 1 except that the resin solution C for forming a transparent heat-resistant protective layer prepared in Synthesis 3 was used instead of the resin solution A for forming a transparent heat-resistant protective layer prepared in Synthesis 1.

### Comparative Example 1

A film D1 was prepared as in Example 1 except that the resin solution D for forming a protective layer was used instead of the resin solution A for forming a transparent heat-resistant protective layer prepared in Synthesis 1.

### Evaluation

The transparent heat-resistant non-flammable films prepared in Examples and Comparative example (film D1 for

Comparative Example 1) were each evaluated as follows. The results are shown in Table 1. The original thermoplastic resin film without a transparent heat-resistant protective layer was also evaluated for their properties such as heat resistance similarly. Numerical values in parentheses in Table 1 show the results evaluated on the original thermoplastic resin film without a transparent heat-resistant protective layer.

### (1) Total light transmittance

The total light transmittance (%) of samples having a thickness of 100 µm was determined with a hazemeter "HR-100" available from Murakami Color Research Laboratory.

### (2) Heat resistance

Each film was cut into a 10 cm by 2 cm specimen, and the specimen was hung with a 5 g weight at its one end in the longitudinal direction in a drying machine at 250°C for one hour, and some change in the film was visually observed. In Table 1, "broken" indicates that the film was broken.

### (3) Mechanical properties

Each film was cut into a 5 cm long and 1 cm wide specimen, and the specimen was inserted into the chuck of an Autograph (available from SHIMADZU) so as to have a length of 2 cm, and was subjected to the tensile test at a rate of 300 mm/min to determine its tensile strength (MPa) and elongation (%) at break.

### (4) Flame retardancy

The flame retardancy was evaluated in accordance with UL94.

### (5) Coefficient of linear expansion (cm/cm·°C)

The coefficient of linear expansion was determined in accordance with ASTM D696.

### (6) Pencil hardness

The pencil hardness of the surface of the film was determined in accordance with JIS K5401.

### (7) Bending strength

Each film was cut into a 5 cm long and 1 cm wide specimen, and the specimen was held bent at its center in the longitudinal direction at 180 degrees for one minute to visually observe the state of the transparent heat-resistant protective layer (a protective layer) on the film.

**[Table 1]**

| | Transparent heat-resistant non-flammable film | Total light transmitance (%) @ 100µm | Heat resistance (250°C/1h) | Tensile strength (MPA) | Elongation at break (%) | Flame retardancy | Coefficient of linear expansion (cm/cm·°C) | Pencil hardness | Bending strength |
|---|---|---|---|---|---|---|---|---|---|
| Example 1 | A1 | 91(88) | No change (Broken) | 80 | 17 | V0(HB) | 5 x 10⁻⁵ | H(HB) | No change |
| Example 2 | A2 | 94(90) | No change (Broken) | 64 | 150 | V0(HB) | 6 x 10⁻⁵ | H(B) | No change |
| Example 3 | A3 | 94(93) | No change (Broken) | 78 | 14 | V0(HB) | 6 x 10⁻⁵ | H(H) | No change |
| Example 4 | A4 | 94(92) | No change (Broken) | 53 | 60 | V0(HB) | 7 x 10⁻⁵ | H(H) | No change |
| Example 5 | A5 | 94(93) | No change (Broken) | 40 | 100 | V0(HB) | 10 x 10⁻⁵ | H(HB) | No change |
| Example 6 | B1 | 91(88) | No change (Broken) | 80 | 17 | V0(HB) | 4 x 10⁻⁵ | H(HB) | No change |
| Example 7 | C1 | 90(88) | No change (Broken) | 80 | 17 | V0(HB) | 6 x 10⁻⁵ | H(HB) | No change |
| Comparative Example 1 | D1 | 51(88) | Broken (Broken) | 80 | 17 | V0(HB) | 7 x 10⁻⁵ | H(B) | cracks |

### Industrial Applicability

A transparent heat-resistant non-flammable film according to the present invention that includes a transparent heat-resistant protective layer formed of a specific silicone resin composition on a surface of a thermoplastic resin film has very high transparency, heat resistance, and flame retardancy. The transparent heat-resistant non-flammable film also has high stain resistance. Furthermore, the transparent heat-resistant protective layer can impart superior properties such as high transparency, heat resistance, flame retardancy, stain resistance, surface hardness, and bending strength to the transparent heat-resistant non-flammable film, compared to the original thermoplastic resin film.

### Reference Signs List

- 1: thermoplastic resin film
- 2: transparent heat-resistant protective layer
- 3: transparent heat-resistant non-flammable film

## Claims

1. A transparent heat-resistant non-flammable film, comprising a transparent heat-resistant protective layer comprising a polysiloxane resin containing a particulate inorganic oxide as a crosslinking agent on at least one surface of a transparent amorphous thermoplastic resin film having a heat distortion temperature of 250°C or less.

2. The transparent heat-resistant non-flammable film according to claim 1, wherein the transparent heat-resistant protective layer has a refractive index in the range of 1.40 to 1.43.

3. The transparent heat-resistant non-flammable film according to claim 1 or 2, wherein the transparent heat-resistant protective layer has a thickness in the range of 1 to 100 µm.

4. The transparent heat-resistant non-flammable film according to any one of claims 1 to 3, wherein the particulate inorganic oxide is a colloidal silica that has a primary particle size in the range of 1 to 100 nm and has a surface potential in the range of pH 2 to 5, and silanol groups on the surface of the colloidal silica are chemically bonded to the polysiloxane resin to crosslink the resin.

5. The transparent heat-resistant non-flammable film according to any one of claims 1 to 4, wherein the polysiloxane resin has at least one reactive group selected from an alkoxysilyl group and a silanol group within the molecule, has a total content of the reactive groups of 8 to 48 wt%, and is crosslinked by chemical bonding with the particulate inorganic oxide.

6. A non-combustible film comprising the transparent heat-resistant non-flammable film according to any one of claims 1 to 5.

7. An optical film comprising the transparent heat-resistant non-flammable film according to any one of claims 1 to 5.

8. A process for production of a transparent heat-resistant non-flammable film, comprising providing a transparent heat-resistant protective layer comprising a silicone resin composition comprising a polysiloxane resin containing a particulate inorganic oxide as a crosslinking agent on at least one surface of a transparent amorphous thermoplastic resin film having a heat distortion temperature of 250°C or less.
